# EUROPEAN PATENT APPLICATION

(11) **EP 2 116 865 A1**
(43) Date of publication of application: **11.11.2009**
(21) Application number: 08155680.5
(22) Date of filing: 06.05.2008
(51) Int. Cl.: G01S 7/52, G01S 15/00, H05K 9/00

(54) **Modeling of a reflective multilayer wall**

(71) Applicant: Nederlandse Organisatie voor toegepast-natuurwetenschappelijk onderzoek TNO, 2628 VK Delft (NL)
(72) Inventor: Schippers, Pieter, 2272 XX Voorburg (NL)
(74) Representative: Hatzmann, Martin

(57) **Abstract**

A method of modelling a reflective wall (W) having an outer wall surface (OS) facing towards a wave source, an inner wall surface (IS) facing away from the wave source, and a wall thickness (T) defined by said surfaces, comprises the step of providing a first set of sampling points (11) arranged in a first plane (10). The first plane substantially corresponds with the outer wall surface (OS), while each sampling point represents local wave scattering properties of the wall. The method further comprises the step of providing a second set of sampling points (21) arranged in a second plane (20), which second plane substantially corresponds with the inner wall surface (IS). The distance (D1) between the first plane (10) and the second plane (20) corresponds with the wall thickness (T). The method may further comprise the step of providing at least one additional set of sampling points (31; 41) arranged in an additional plane (30; 40), the distance between the at least one additional plane and any preceding plane corresponding with the wall thickness.

## Description

The present invention relates to reflective wall modelling. More in particular, the present invention relates to a method of modelling a reflective wall having an outer wall surface facing towards a wave source, an inner wall surface facing away from the wave source, and a wall thickness defined by said surfaces, in which method sampling points are used to represent local wave scattering properties of the wall.

It is known *per se* to model reflective surfaces using models consisting of sampling points (surface samples). By using a limited number of sampling points, a surface can be modelled with a reduced computational effort. Thus a reliable model of the outer surface of a wall may be obtained using Prior Art methods.

However, a wall not only has an outer surface but also an opposite surface, separated by the wall thickness. The present inventor has found that waves penetrating the wall and reflecting off the opposite wall surface can have a significant influence on the reflective properties of the wall, but that these waves are ignored in Prior Art modelling methods.

It is an object of the present invention to overcome these and other problems of the Prior Art and to provide a method of modelling a reflective wall which takes the wall thickness and any inner reflections into account.

Accordingly, the present invention provides a method of modelling a reflective wall having an outer wall surface facing towards a wave source, an inner wall surface facing away from the wave source, and a wall thickness defined by said surfaces, the method comprising the step of providing a first set of sampling points arranged in a first plane, which first plane substantially corresponds with the outer wall surface, and wherein each sampling point represents local wave scattering properties of the wall, which method is characterised by the step of providing a second set of sampling points arranged in a second plane, which second plane substantially corresponds with the inner wall surface, the distance between the first plane and the second plane substantially corresponding with the wall thickness.

By providing a second set of sampling points arranged in a second plane, which second plane substantially corresponds with the inner wall surface, the presence of the opposite, outer wall can be taken into account. By making the distance between the first plane and the second plane substantially correspond with the wall thickness, the wall thickness is appropriately modelled. In addition, reflections off the inner surface can be modelled correctly. It will be clear that in the one-dimensional wall model of the Prior Art only reflections off the outer surface could be taken into account, whereas the present two-dimensional model allows much more extensive and realistic modelling, resulting in better predictions.

The method of the present invention preferably further comprises the step of providing a third set of sampling points arranged in a third plane, the distance between the second plane and the third plane corresponding with the wall thickness. This step allows taking into account waves that penetrate the wall through the outer wall surface, are reflected by the inner wall surface, are reflected again by the outer wall surface and yet again by the inner wall surface, before finally passing through the outer wall surface. In other words, this (optional) additional step allows inner reflections to be modelled.

The method of the present invention may further comprise the step of providing a fourth set of sampling points arranged in a fourth plane, the distance between the third plane and the fourth plane corresponding with the wall thickness. This step allows taking into account waves that are reflected twice by the outer wall surface and three times by the inner wall surface.

Similarly, the method of the present invention may further comprise the step of providing at least one additional set of sampling points arranged in an additional plane, the distance between the at least one additional plane and any preceding plane corresponding with the wall thickness. This step allows taking into account multiple inner reflections of the waves.

In order to obtain sufficient modelling accuracy, it is preferred that the mutual spacing of the sampling points in a plane is smaller than one-tenth of the wavelength of the wave source, more preferably smaller than one-twentieth of the wavelength of the wave source.

Advantageously, each sampling point has an associated attenuation coefficient. This allows an appropriate attenuation corresponding with passing through or being reflected by a wall boundary (that is, wall surface) to be assigned to the sampling points, such that each wave reaching a wall surface is realistically attenuated.

It is particularly preferred that the attenuation coefficients associated with the second and any further layers are greater than the attenuation coefficients associated with the first layer. This is especially preferred for first layer sampling points where the waves pass through the wall surface but may also be used for first layer sampling points where reflection takes place. In some embodiments, the first layer sampling points (in particular when not reflecting) may even have an associated attenuation equal to zero.

The method of the present invention may further comprise the steps of determining an impulse response for each sampling point in response to a wave, and transforming the impulse responses into the frequency domain to obtain a frequency spectrum of the reflective wall. This allows a frequency domain model of the wall to be produced, on the basis of time-domain impulse responses.

The present invention also provides a computer program product for carrying out the method as defined above. A computer program product may comprise a set of computer executable instructions stored on a data carrier, such as a CD or a DVD. The set of computer executable instructions, which allow a programmable computer to carry out the method as defined above, may also be available for downloading from a remote server, for example via the Internet.

The present invention additionally provides a method of estimating the performance of sonar devices, the method comprising a method of modelling a reflective wall according to any of the preceding claims, wherein the wave source is a model of the sonar device.

The present invention further provides a device for modelling a reflective wall having an outer wall surface facing towards a wave source, an inner wall surface facing away from the wave source, and a wall thickness defined by said surfaces, the device comprising a processing unit for providing a first set of sampling points arranged in a first plane, which first plane substantially corresponds with the outer wall surface, and wherein each sampling point represents local wave scattering properties of the wall, which device is **characterised in that** the processing unit is arranged for providing a second set of sampling points arranged in a second plane, which second plane substantially corresponds with the inner wall surface, the distance between the first plane and the second plane corresponding with the wall thickness.

The present invention still further provides a sonar testing system, comprising a device as defined above.

The present invention will further be explained below with reference to exemplary embodiments illustrated in the accompanying drawings, in which:
Fig. 1 schematically shows a wall which can be modelled using the present invention.
Fig. 2 schematically shows a reflective wall model according to the present invention.
Fig. 3 schematically shows a device for modelling a reflective wall in accordance with the present invention.

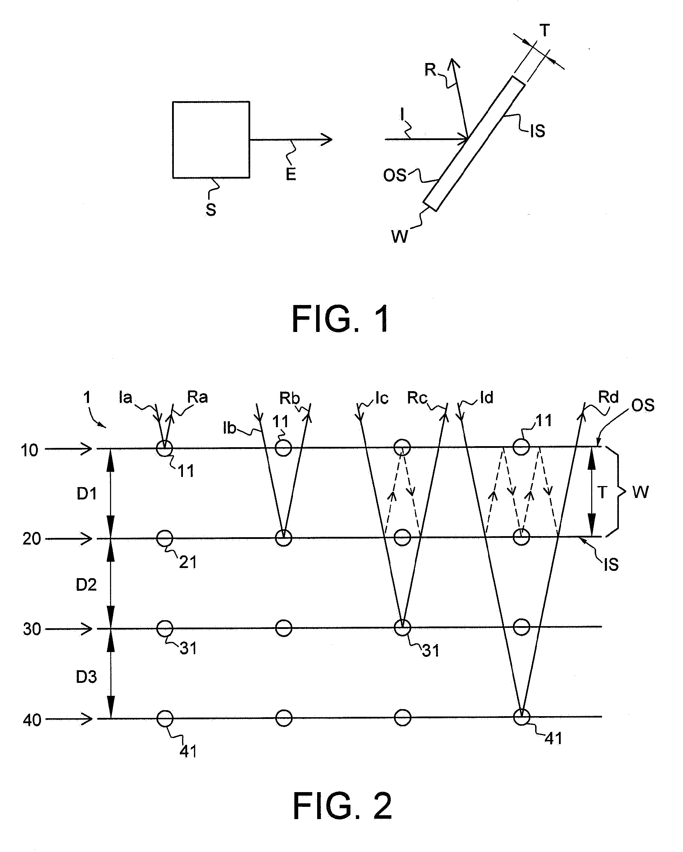

The wall W shown merely by way of non-limiting example in Fig. 1 comprises an outer surface OS facing a wave source S and an inner surface IS facing away from the wave source S. The wall W has a thickness T and may be made of metal or any other material capable of reflecting waves, in particular acoustic waves such as sonar waves.

The wave source S may be an acoustic wave source, such as a sonar wave source. However, the present invention is not so limited and may also be used in conjunction with electromagnetic waves, such as radar waves. Electromagnetic waves are here meant to include visible and non-visible light. The wave source S produces emitted waves E which are incident waves I at the wall W and, after reflection by the wall W, return as reflected waves R.

The wall model according to the present invention is illustrated in Fig. 2. In the merely exemplary embodiment shown, the wall model 1 comprises a first layer 10 comprising sampling points 11, a second layer 20 comprising sampling points 21, a third layer 30 comprising sampling points 31 and a fourth layer 40 comprising sampling points 41. Within each layer, the sampling points are spaced apart, their mutual spacing within each layer preferably being less than one-tenth of the wavelength of the wave source, more preferably less than one-twentieth of said wavelength. It will be understood that a larger spacing will simplify computations, at the expense of a smaller accuracy. It has been found that a mutual spacing of less than one-tenth of the wavelength provides sufficient accuracy.

Each sampling point or "pixel" represents the properties of the wall in a point, in particular the properties reflection coefficient, attenuation and possibly other properties. These properties may be dependent on the angle of incidence of the waves.

The distances D1, D2 and D3 between the layers correspond with the wall thickness T in order to correctly model inner reflections of the wall. The distance D1 between the first layer 10 and the second layer 20, for example, is substantially equal to both the wall thickness T and the distance D2 between the second layer 20 and the third layer 30.

Four different scenarios can be distinguished in Fig. 2. A first incident wave Ia is (completely) reflected at the outer surface OS of the wall W, which is modelled as a complete reflection at a first layer sampling point 11. This results in a first reflected wave Ra.

A second incident wave Ib passes through the outer surface (OS) to be reflected at the inner surface (IS), represented by the second layer 20. After passing through the outer surface (OS) represented by the first layer 10 again, this wave results in a second reflected wave Rb.

A third incident wave Ic passes through the outer surface (OS) 10 to be reflected at the inner surface (IS), again at the outer surface (OS), and yet again at the inner surface (IS). In accordance with the present invention, this is modelled as illustrated in Fig. 2: the incident wave Ic passes through the first and second layers 10, 20 and is reflected at the third layer 30 (it is noted that the interrupted lines indicates the physical wave paths where they deviate from the model wave paths). After passing through the second layer 20 and the first layer 10 again, this wave results in a third reflected wave Rc. It is noted that the reflection at the outer surface (IS) is modelled as a reflection at the third layer 30. Accordingly, the third layer 30 serves to model inner reflections and mirrors the outer layer (IS).

Finally, a fourth incident wave Id passes through the outer surface (OS), is reflected three times by the inner surface (IS) and twice by the outer surface (OS) before passing through the outer surface and resulting in the fourth reflected wave Rd. It can thus be seen that the fourth layer 40 serves to model further reflections within the wall.

It is noted that some waves will pass through the wall and will not be reflected at all.

When passing through a layer, and when reflected at a layer, a suitable attenuation coefficient may be applied to the wave. The values of the attenuation coefficients may be determined experimentally and/or theoretically.

By using the present invention, for each incident wave a corresponding set of reflected waves may be determined, thus determining the reflective behaviour of the wall. Instead of a single wall, a structure comprising multiple walls and surfaces may be modelled and examined.

The present invention may therefore advantageously be used for modelling the reflective behaviour of walls and bodies, for example ship hulls, in response to acoustic waves such as sonar waves. As mentioned before, the present invention may also be utilized to model the response of other objects to electromagnetic waves, for example the response of aircraft to radar waves.

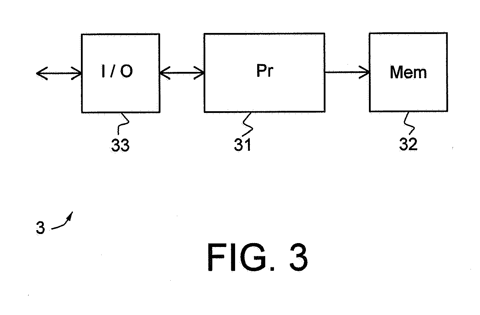

A merely exemplary embodiment of a device 3 for modelling a reflective wall is illustrated in Fig. 1. The device shown in Fig. 3 comprises a processing unit 31 for providing at least two sets of sampling points arranged in separate, preferably parallel planes. A wall model incorporating these sampling points in stored in a memory unit 32, which also stores suitable software for carrying out the method steps defined above. The device 3 also comprises an input/output (I/O) unit 33 for receiving input information, such as the wall thickness (T), the number and properties of the sampling points (11, 21, ...), and the wavelength and intensity of the wave source. The input/output unit 33 is preferably also suitable for producing output information, such as the intensity and direction of reflected waves.

The present invention can advantageously be used in the design and manufacture of ships, airplanes, pipes, and other structures.

The present invention is based upon the insight that additional layers of sampling points allow a much more realistic modelling of the wave reflecting behaviour of walls, and that at least one additional layer of sampling points may be used to model the wall surface facing away from the wave source. The present invention benefits from the further insight that third and further layers may be used to model inner reflections of a wall.

It is noted that any terms used in this document should not be construed so as to limit the scope of the present invention. In particular, the words "comprise(s)" and "comprising" are not meant to exclude any elements not specifically stated. Single elements may be substituted with multiple elements or with their equivalents.

It will be understood by those skilled in the art that the present invention is not limited to the embodiments illustrated above and that many modifications and additions may be made without departing from the scope of the invention as defined in the appending claims.

## Claims

1. A method of modelling a reflective wall (W) having an outer wall surface (OS) facing towards a wave source(S), an inner wall surface (IS) facing away from the wave source (S), and a wall thickness (T) defined by said surfaces (OS, IS), the method comprising the step of providing a first set of sampling points (11) arranged in a first plane (10), which first plane substantially corresponds with the outer wall surface (OS), and wherein each sampling point (11) represents local wave scattering properties of the wall,
**characterised by** the step of providing a second set of sampling points (21) arranged in a second plane (20), which second plane substantially corresponds with the inner wall surface (IS), the distance (D1) between the first plane (10) and the second plane (20) corresponding with the wall thickness (T).

2. The method according to claim 1, further comprising the step of providing a third set of sampling points (31) arranged in a third plane (30), the distance (D2) between the second plane (20) and the third plane (30) corresponding with the wall thickness (T).

3. The method according to claim 2, further comprising the step of providing a fourth set of sampling points (41) arranged in a fourth plane (40), the distance (D3) between the third plane (30) and the fourth plane (40) corresponding with the wall thickness (T).

4. The method according to claim 3, further comprising the step of providing at least one additional set of sampling points arranged in an additional plane, the distance between the at least one additional plane and any preceding plane corresponding with the wall thickness (T).

5. The method according to any of the preceding claims, wherein the mutual spacing of the sampling points (e.g. 11) in a plane (e.g. 10) is smaller than one-tenth of the wavelength of the wave source (S), preferably smaller than one-twentieth of the wavelength of the wave source.

6. The method according to any of the preceding claims, wherein each sampling point (11; 21; 31; 41) has an associated attenuation coefficient.

7. The method according to claim 6, wherein the attenuation coefficients associated with the second and any further layers (20; 30; 40) are greater than the attenuation coefficients associated with the first layer (10).

8. The method according to any of the preceding claims, further comprising the steps of determining an impulse response for each sampling point (11, 21, 31, 41) in response to a wave, and transforming the impulse responses into the frequency domain to obtain a frequency spectrum of the reflective wall (W).

9. A computer program product for carrying out the method according to any of claims 1-8.

10. A method of estimating the performance of sonar devices, the method comprising a method of modelling a reflective wall according to any of the preceding claims, wherein the wave source is a model of the sonar device.

11. A device (3) for modelling a reflective wall (W) having an outer wall surface facing (OS) towards a wave source (S), an inner wall surface (IS) facing away from the wave source, and a wall thickness (T) defined by said surfaces, the device comprising a processing unit (31) for providing a first set of sampling points (11) arranged in a first plane (10), which first plane substantially corresponds with the outer wall surface (OS), and wherein each sampling point represents local wave scattering properties of the wall,
**characterised in that** the processing unit (31) is arranged for providing a second set of sampling points (21) arranged in a second plane (20), which second plane substantially corresponds with the inner wall surface (IS), the distance between the first plane and the second plane corresponding with the wall thickness (T).

12. The device according to claim 11, wherein the processing unit (31) is further arranged for providing at least one additional set of sampling points (31; 41) arranged in an additional plane (30; 40), the distance between the at least one additional plane and any preceding plane corresponding with the wall thickness (T).

13. A sonar testing system, comprising a device according to claim 11 or 12.
